# EUROPÄISCHE PATENTSCHRIFT

(11) **EP 1 184 219 B1**
(45) Veröffentlichungstag und Bekanntmachung des Hinweises auf die Patenterteilung: **04.10.2006**
(21) Anmeldenummer: 01120866.7
(22) Anmeldetag: 30.08.2001
(51) Int. Cl.: B60J 10/12, B60J 10/00

(54) **Dichtungsprofil, insbesondere für eine Schiebedachdichtung**
Sealing profile, particularly for a sliding roof sealing
Profil d'étanchéité, en particulier pour joint d'étanchéité de toit coulissant

(30) Priorität: 31.08.2000 DE 10043154
(43) Veröffentlichungstag der Anmeldung: 06.03.2002
(73) Patentinhaber: Webasto Vehicle Systems International GmbH, 82131 Stockdorf (DE)
(72) Erfinder: Nolles, Dennis Rinse, 81243 München (DE); Kölbl, Michael, 82061 Neuried (DE); Schröferl, Thomas, 82069 Hohenschäftlarn (DE)
(74) Vertreter: Konnerth, Dieter Hans

(56) Entgegenhaltungen:
- EP-A- 0 430 421
- EP-A- 0 517 471
- EP-A- 0 612 568
- US-A- 5 115 007
- US-A- 5 221 707
- US-A- 5 383 991
- US-A- 6 099 779

## Beschreibung

Die Erfindung betrifft ein Dichtungsprofil, insbesondere für eine Schiebedachdichtung, mit einem an einem Bauteil bzw. einem Schiebedachdeckel festlegbaren verformungssteifen Basisbereich und einem elastischen Dichtungsbereich, der sich unter Bildung einer Hohlkammer über den Basisbereich wölbt.

Beim Ausstellen und/oder Verschieben eines Schiebedachdeckels gleitet eine am Umfangsrand des Deckels angebrachte Dichtung, die mit ihrem elastischen Dichtungsbereich an einer Gegenfläche eines eine Schiebedachöffnung umgebenden Rahmens anliegt, über diese Gegenfläche. Wenn der Dichtungsbereich bei der Gleitbewegung wiederholt kurzzeitig an der Gegenfläche anhaftet, können bei dem sich anschließenden spontanen Übergang von der Haftreibung zur Gleitreibung (Stick-Slip-Effekt) störende Knarz- oder Quietschgeräusche entstehen.

In der DE 34 42 653 C1 ist eine Hohlkammerdichtung als Abdichtung eines Spaltes zwischen einem Schiebedachdeckel und einem diesen umgebenden festen Dachbereich eines Kraftwagens beschrieben. Die Hohlkammerdichtung weist an ihrem Dichtungsbereich eine reibungsmindernde Beschichtung auf.

In der EP 0 615 874 A2 ist ein Schiebedachdeckel eines Kraftwagens beschrieben, der mittels einer randseitig umlaufenden Dichtung gegenüber einem eine Dachöffnung umgebenden Rahmen abgedichtet ist. Die Dichtung besteht aus einem innenliegenden, deckelseitigen, sich vertikal erstreckenden Profilbereich aus einem Elastomer wie z. B. aus EPDM mit einer Shore-A-Härte von etwa 70.

An diesen Elastomerbereich ist außenliegend ein Hohlkammerprofil aus Moosgummi anextrudiert, wobei beide Teile auch durch Koextrusion hergestellt sein können. Die Außenfläche des Hohlkammerprofils enthält eine Beflockung aus Polyester zur Abdichtung gegen den Rahmen der Dachöffnung.

Bei diesen bekannten Dichtungsprofilen ist ein geräuschfreier Betrieb bei unterschiedlichen Temperaturen und bei trockener oder feuchter Umgebung nicht gewährleistet.

In der EP 0 517 471 A2 sind Beschichtungszusammensetzungen offenbart, die als funktionelle Beschichtungen für Elastomer-Substrate wie z. B. für einen aus EPDM hergestellten Führungskanal einer Fahrzeugscheibe verwendet werden können und ein aliphatisches Polyurethan enthalten können, wodurch sich ein Fensterdichtungs-Substrat mit hoher Abriebfestigkeit und geringer Reibung herstellen läßt.

Aufgabe der Erfindung ist es, ein eingangs genanntes Dichtungsprofil bereitzustellen, das beim Öffnen des Bauteils bzw. des Schiebedachdeckels seine Dichtfunktion ohne störende Geräuschentwicklung erfüllt.

Diese Aufgabe wird bei dem eingangs genannten Dichtungsprofil erfindungsgemäß durch das kennzeichnende Merkmal von Anspruch 1 gelöst. Eine derartige Beschichtung weist reibungsmindernde Eigenschaften auf, so daß der elastische Dichtungsbereich an der Gegenfläche im wesentlichen nicht mehr anhaften kann oder die Haftkraft derart gering ist, daß eine nahezu kontinuierliche Gleitbewegung des elastischen Dichtungsbereichs an der Gegenfläche ohne störende Knarz- oder Quietschgeräusche möglich ist. Das Dichtungsprofil eignet sich insbesondere zum Abdichten eines Schiebedachdeckels eines Fahrzeugs, kann jedoch auch zum Abdichten von anderen Bauteilen wie Deckeln von Schiebehebedächern oder Spoilerdächern, von Ausstelldeckeln oder Ausstellfenstem und dergleichen bewegbaren Teilen verwendet werden.

Vorteilhafte Ausgestaltungen der Erfindung sind in den Unteransprüchen angegeben.

Als eine weitere Komponente der Beschichtung kann ein Carbodiimid-Crosslinker vorgesehen sein. Dieses Vernetzungsmittel kann insbesondere in einem Anteil von beispielsweise 5-8% enthalten sein. Des weiteren kann die Beschichtung als weiteren Bestandteil N-Methyl-2-Pyrrolidon enthalten, um die Gleiteigenschaften noch zu verbessern. Diese Beschichtung weist beste reibungsmindernde Eigenschaften auf, so daß der elastische Dichtungsbereich an der Gegenfläche im wesentlichen nicht mehr anhaften kann oder die Haftkraft derart gering ist, daß eine nahezu kontinuierliche Gleitbewegung des elastischen Dichtungsbereichs an der Gegenfläche ohne störende Knarz- oder Quietschgeräusche möglich ist.

Besonders bevorzugt ist eine Ausführungsform, bei der der elastische Dichtungsbereich aus einem EPDM-Moosgummi hergestellt ist. Die Kombination aus der Beschichtung, beispielsweise mit einem wasserlöslichen 2-Komponenten-PUR(N-Methyl-2-Pyrrolidon)-Gleitlack, auf dem EPDM-Moosgummi bietet ein deutlich verbessertes Gleitverhalten des Dichtungsbereichs, so daß ein Stick-Slip-Effekt vermieden wird. Jedoch können auch andere elastische Materialien wie z. B. Silikon für den Dichtungsbereich verwendet werden, die mit der genannten Beschichtung ebenfalls ein besseres Gleitverhalten aufweisen. Wenn das EPDM-Moosgummi mit einem grobkörnigen Polyurethan beschichtet ist, das auch Fluorpartikel enthalten kann, sorgt die rauhere Oberfläche für eine geringere Kontaktfläche an der Dichtgegenfläche und für ein verringertes Anhaften der Dichtung. Bei Verwendung von Moosgummi genügt der Dichtung ein geringer Gesamtanpreßdruck, da die Zellen des Moosgummis selbst einen gewissen Druck erzeugen.

Zweckmäßigerweise ist der Basisbereich des Dichtungsprofils aus einem Solid-EPDM hergestellt. Damit kann der Basisbereich mit einer für einen Träger erforderlichen Festigkeit mit erhöhtem Verformungswiderstand hergestellt werden. Jedoch können auch andere Kunststoffe verwendet werden.

Zur Befestigung des Dichtungsprofils an dem Bauteil ist es zweckmäßig, wenn der Basisbereich des Dichtungsprofils einen Dichtungsfuß zum Festlegen des Dichtungsprofils an einer Halterung am Umfang eines Bauteils bzw. eines Schiebedachdeckels aufweist. Die Befestigung kann auch z. B. mittels einer Klebeverbindung über eine ebene Außenseite des Basisbereichs erfolgen.

Die Halterung für das Dichtungsprofil kann ein am Umfang des Schiebedachdekkels aus Kunststoff angespritzter Rand sein.

Bevorzugt überdeckt der Dichtungsbereich einen Oberabschnitt des Basisbereichs oberseitig. Damit hat das Dichtungsprofil an der im Einbauzustand sichtbaren Oberseite ein einheitliches Erscheinungsbild.

Wenn in einer bevorzugten Ausführungsform der obere innere Übergang vom Dichtungsbereich zum Basisbereich unter Vermeidung von Materialanhäufung keilförmig ausgehöhlt ist und im wesentlichen spitz oder mit kleinem Rundungsradius zuläuft, so wird das Verformungsverhalten des Dichtungsbereichs im verformten Dichtungseingriff verbessert. Eine Materialanhäufung im Übergangsbereich würde zu einem höheren Verformungswiderstand und damit zu einer höheren Anpreßkraft des Dichtungsbereichs an die Gegenfläche führen, wodurch in unerwünschter Weise ein Anhaften und ein Stick-Slip-Effekt begünstigt würde. Die erfindungsgemäße Gestaltung vermeidet diese Nachteile.

Nachfolgend wird ein Ausführungsbeispiel des Dichtungsprofils unter Bezugnahme auf Zeichnungen näher erläutert. Es zeigt:
- Fig. 1: in einer Querschnittansicht ein Dichtungsprofil an einem Schiebedachdeckel; und
- Fig. 2: in einer Querschnittansicht in schematischer Darstellung das Dichtungsprofil in verformtem Zustand im Dichtungseingriff an einer Dachgegenfläche.

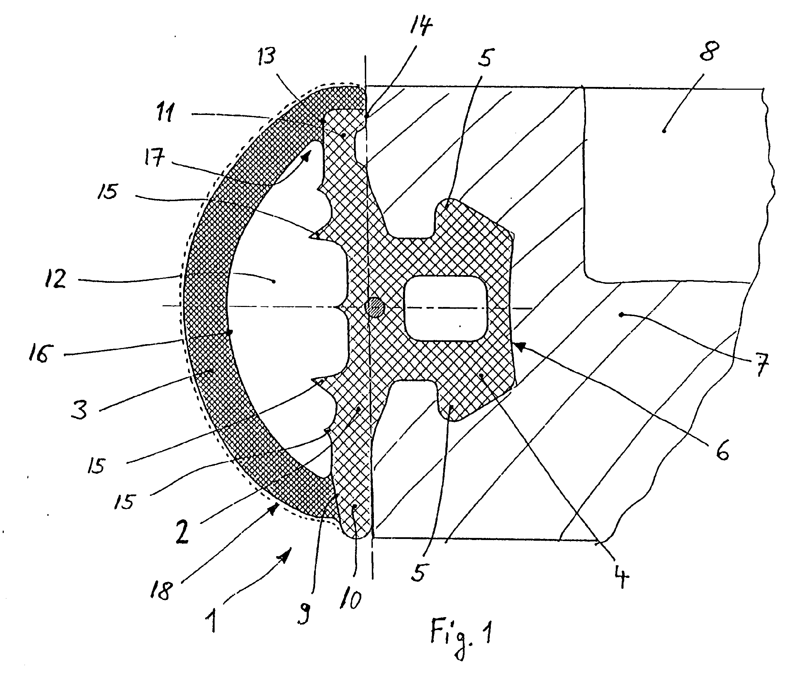

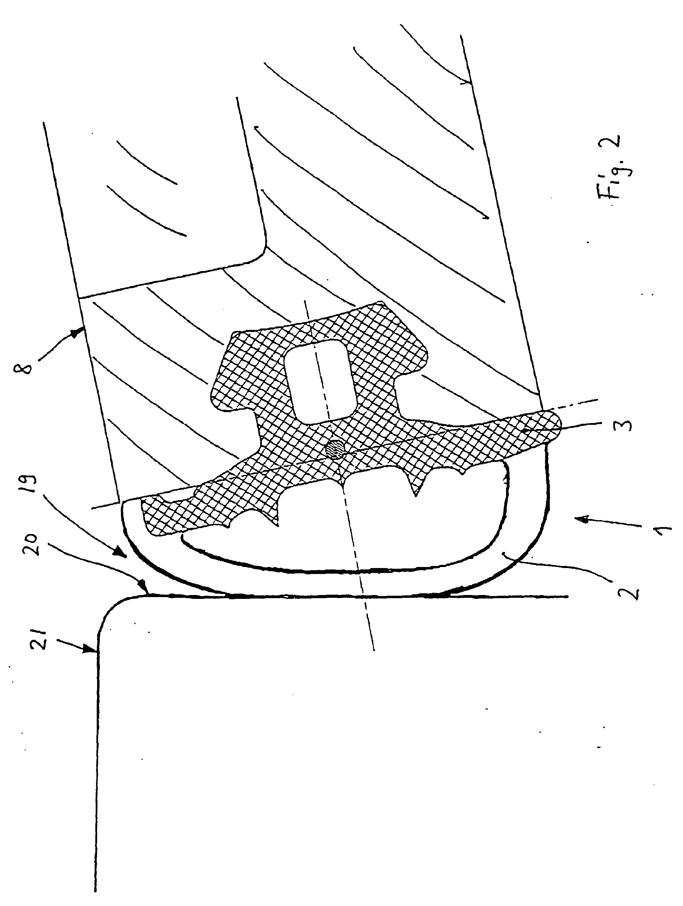

Eine Dichtung zum Abdichten eines Randspaltes 19 zwischen einem Schiebedachdeckel 8 eines Fahrzeugs und einer Gegenfläche 20 an einem eine Dachöffnung umgebenden Rahmen 21 (siehe Fig. 2) enthält ein längliches Dichtungsprofil 1 mit einem Basisbereich 2 und einem Dichtungsbereich 3 (siehe Fig. 1). Der Basisbereich 2 ist als hartes Formteil gebildet, z. B. aus einem Solid-EPDM (Ethylen-Propylen-Dien-Terpolymer) mit einer Shore-A-Härte von etwa 85 extrudiert, und stellt eine im wesentlichen verformungsfreie Tragestruktur für den Dichtungsbereich 3 bereit. Der Basisbereich 2 enthält einen Dichtungsfuß 4 mit Vorsprüngen 5, der im Einbauzustand des Dichtungsprofils 1 in einer entsprechenden nutförmigen und hinterschnittenen Ausnehmung 6 in einem aus PU-Schaum angeschäumten Rand 7 des Schiebedach-Glasdeckels 8 fest aufgenommen ist.

Der elastische Dichtungsbereich 3 ist einerseits an einer äußeren Stirnseite 9 im Unterabschnitt 10 des Basisbereichs 2 und andererseits am Oberabschnitt 11 des Basisbereichs 2 befestigt und wölbt sich unter Bildung einer Hohlkammer 12 über den Basisbereich 2. Der Dichtungsbereich 3 ist am Oberabschnitt 11 des Basisbereichs 2 derart befestigt, daß er sowohl an einer Stirnseite 13 des Basisbereichs 2 anliegt wie auch den Oberabschnitt 11 oberseitig vollständig überdeckt und dabei bis zu einer rückseitigen Anlagekante 14 des Basisbereichs 2 reicht.

Der Basisbereich 2 weist mehrere in die Hohlkammer 12 hervorstehende und insbesondere spitz zulaufende Rippen 15 auf, an denen die Innenseite 16 des Dichtungsbereichs 3 lediglich linienförmig anliegt, wenn der Dichtungsbereich 3 vollständig gegen den Basisbereich 2 gedrückt ist. Damit wird eine Anhaften der Innenseite 16 des Dichtungsbereichs 3 am Basisbereich 2 vermieden.

An der oberen Befestigung des Dichtungsbereichs 3 am Basisbereich 2 ist ein innerer Übergang 17 derart gebildet, daß sich die Hohlkammer 12 keilförmig in den Übergang 17 erstreckt, wobei die gedachte Keilspitze spitz zuläuft oder eine Abrundung mit einem kleinem Radius aufweist, so daß eine Materialanhäufung im Übergang 17 vermieden wird. Dadurch wird das Einfedern des Dichtungsbereichs 3 erleichtert, wenn sich das Dichtungsprofil 1 im verformten Dichtungseingriff befindet, wie beispielsweise bei einem um seine Vorderkante ausgestellten Deckel 8 (siehe Fig. 2), und aufgrund einer reduzierten Anpreßkraft ist die Neigung des Dichtungsbereichs 3 zum Anhaften an der Dichtungs-Gegenfläche 20 verringert.

Der Dichtungsbereich 3 ist bevorzugt aus einem EPDM-Moosgummi hergestellt, das eine Dichte von etwa 0,7 g/cm³ aufweist. Der Dichtungsbereich 3 ist beispielsweise an den Basisbereich 2 anextrudiert oder das Dichtungsprofil 1 ist durch Koextrusion des Basisbereichs 2 und des Dichtungsbereichs 3 hergestellt.

An der Außenseite des Dichtungsbereichs 3 ist eine reibungsmindernde Beschichtung 18 (durch eine unterbrochene Linie dargestellt) angebracht, die ein 2-Komponenten-Polyurethan-System enthält. Die eine Komponente ist ein aliphatisches Polyurethan und die andere Komponente ist ein Carbodiimid-Crosslinker, der beispielsweise einen Anteil von 5-8% ausmacht. Als weiterer Bestandteil kann N-Methyl-2-Pyrrolidon enthalten sein, beispielsweise in einem Anteil von 1-3%. Eine derartige Beschichtung ist unter dem Handelsnamen Stahl-Permutex® bekannt. Diese als Gleitlack vorliegende Beschichtung, die nach dem Aufsprühen auf den Dichtungsbereich 3 getrocknet wird, hat eine haftungsvermindernde Wirkung und bewirkt beim Aufstellen des Glasdeckels 8, wenn dieser sowohl an seinem Vorderrand wie auch an den Seitenrändern und dem Hinterrand eine Relativbewegung gegenüber dem Rahmen 21 des Daches ausführt, ein im wesentlichen kontinuierliches Gleiten des Dichtungsbereichs 3 an der Gegenfläche 20 des Rahmens 21 ohne Anhaften, so daß Knarz- und Quietschgeräusche vermieden werden.

### Bezugszeichenliste

- 1: Dichtungsprofil
- 2: Basisbereich
- 3: Dichtungsbereich
- 4: Dichtungsfuß
- 5: Vorsprung
- 6: Ausnehmung
- 7: Rand
- 8: Glasdeckel
- 9: Stirnseite
- 10: Unterabschnitt
- 11: Oberabschnitt
- 12: Hohlkammer
- 13: Stirnseite
- 14: Anlagekante
- 15: Rippen
- 16: Innenseite
- 17: Übergang
- 18: Beschichtung
- 19: Randspalt
- 20: Gegenfläche
- 21: Rahmen

## Patentansprüche

1. Dichtungsprofil, insbesondere für eine Schiebedachdichtung, mit einem an einem Bauteil bzw. einem Schiebedachdeckel festlegbaren verformungssteifen Basisbereich (2) und einem elastischen Dichtungsbereich (3), der sich unter Bildung einer Hohlkammer über den Basisbereich wölbt, wobei
der elastische Dichtungsbereich (3) eine Beschichtung (18) aufweist, die ein aliphatisches Polyurethan enthält,
**dadurch gekennzeichnet, daß** diese Beschichtung fluoriertes Polyether (C₃F₆O) enthält.

2. Dichtungsprofil nach Anspruch 1,
**dadurch gekennzeichnet, daß** eine weitere Komponente der Beschichtung (18) ein Carbodiimid-Crosslinker ist, insbesondere in einem Anteil von beispielsweise 5-8%.

3. Dichtungsprofil nach Anspruch 1 oder 2,
**dadurch gekennzeichnet, daß** die Beschichtung (18) als weiteren Bestandteil N-Methyl-2-Pyrrolidon enthält.

4. Dichtungsprofil nach einem der Ansprüche 1 bis 3,
**dadurch gekennzeichnet, daß** der elastische Dichtungsbereich (3) aus einem EPDM-Moosgummi hergestellt ist.

5. Dichtungsprofil nach einem der Ansprüche 1 bis 4,
**dadurch gekennzeichnet, daß** der Basisbereich (2) des Dichtungsprofils (1) aus einem Solid-EPDM hergestellt ist.

6. Dichtungsprofil nach einem der Ansprüche 1 bis 5,
**dadurch gekennzeichnet, daß** der Basisbereich (2) des Dichtungsprofils (1) einen Dichtungsfuß (4) zum Festlegen des Dichtungsprofils (1) an einer Halterung (6, 7) am Umfang eines Schiebedachdeckels (8) aufweist.

7. Dichtungsprofil nach Anspruch 6,
**dadurch gekennzeichnet, daß** die Halterung (6, 7) am Umfang des Schiebedachdeckels (8) aus Kunststoff angespritzt ist.

8. Dichtungsprofil nach einem der Ansprüche 1 bis 7,
**dadurch gekennzeichnet, daß** der Dichtungsbereich (3) einen Oberabschnitt (11) des Basisbereichs (2) oberseitig überdeckt.

9. Dichtungsprofil nach einem der Ansprüche 1 bis 8,
**dadurch gekennzeichnet, daß** der obere innere Übergang (17) vom Dichtungsbereich (3) zum Basisbereich (2) unter Vermeidung von Materialanhäufung keilförmig ausgehöhlt ist und im wesentlichen spitz oder mit kleinem Rundungsradius zuläuft.

## Claims

1. Sealing profile, in particular for a sliding roof seal, having a deformation-stiff base region (2) which can be fixed to a component or a sliding roof panel, and a resilient sealing region (3) which arches over the base region, forming a hollow chamber, the resilient sealing region (3) having a coating (18) which contains an aliphatic polyurethane, **characterized in that** this coating contains fluorinated polyether (C₃F₆O).

2. Sealing profile according to Claim 1, **characterized in that** a further component of the coating (18) is a carbodiimide cross-linker, in particular in a proportion of 5-8%, for example.

3. Sealing profile according to Claim 1 or 2, **characterized in that** the coating (18) contains N-methyl-2-pyrrolidone as a further constituent.

4. Sealing profile according to one of Claims 1 to 3, **characterized in that** the resilient sealing region (3) is produced from an EPDM sponge rubber.

5. Sealing profile according to one of Claims 1 to 4, **characterized in that** the base region (2) of the sealing profile (1) is produced from a solid EPDM.

6. Sealing profile according to one of Claims 1 to 5, **characterized in that** the base region (2) of the sealing profile (1) has a seal foot (4) for fixing the sealing profile (1) to a holder (6, 7) on the periphery of a sliding roof panel (8).

7. Sealing profile according to Claim 6, **characterized in that** the holder (6, 7) is injection-moulded on the periphery of the plastic sliding roof panel (8).

8. Sealing profile according to one of Claims 1 to 7, **characterized in that** the sealing region (3) covers the top of an upper section (11) of the base region (2).

9. Sealing profile according to one of Claims 1 to 8, **characterized in that** the upper inner transition (17) from the sealing region (3) to the base region (2) is hollowed out in a wedge shape, avoiding an accumulation of material, and is substantially pointed or tapers with a small rounding radius.

## Revendications

1. Profilé d'étanchéité, en particulier pour une garniture d'étanchéité de toit ouvrant, avec une partie de base (2) résistant à la déformation pouvant être fixée à un élément structurel ou à un capot de toit ouvrant et une partie d'étanchéité élastique (3), qui se voûte sous la forme d'une chambre en creux au-dessus de la partie de base, la partie d'étanchéité élastique (3) présentant un revêtement (18) qui comprend un polyuréthane aliphatique,
**caractérisé en ce que** ce revêtement comprend du polyéther fluoré (C₃F₆O).

2. Profilé d'étanchéité selon la revendication 1,
**caractérisé en ce qu'**un autre composant du revêtement (18) est un agent de réticulation carbodiimide, en particulier dans une proportion de 5 à 8 % par exemple.

3. Profilé d'étanchéité selon la revendication 1 ou 2,
**caractérisé en ce que** le revêtement (18) comprend comme autre composant le N-méthyl-2-pyrrolidone.

4. Profilé d'étanchéité selon l'une quelconque des revendications 1 à 3,
**caractérisé en ce que** la partie d'étanchéité élastique (3) est fabriquée en caoutchouc mousse d'EPDM.

5. Profilé d'étanchéité selon l'une quelconque des revendications 1 à 4,
**caractérisé en ce que** la partie de base (2) du profilé d'étanchéité (1) est fabriquée en EPDM solide.

6. Profilé d'étanchéité selon l'une quelconque des revendications 1 à 5,
**caractérisé en ce que** la partie de base (2) du profilé d'étanchéité (1) présente un montant d'étanchéité (4) destiné à fixer le profilé d'étanchéité (1) à une bride de support (6, 7) sur le périmètre d'un capot de toit ouvrant (8).

7. Profilé d'étanchéité selon la revendication 6,
**caractérisé en ce que** la bride de support (6, 7) sur le périmètre du capot de toit ouvrant est injectée en plastique.

8. Profilé d'étanchéité selon l'une quelconque des revendications 1 à 7,
**caractérisé en ce que** la partie d'étanchéité (3) recouvre la face supérieure d'une section supérieure (11) de la partie de base (2).

9. Profilé d'étanchéité selon l'une quelconque des revendications 1 à 8,
**caractérisé en ce que** la transition interne supérieure (17) de la partie d'étanchéité (3) à la partie de base (2) est évidée en forme de coin afin d'éviter l'accumulation de matériau et se termine essentiellement en pointe ou avec un petit arrondi.
